# EUROPEAN PATENT SPECIFICATION

(11) **EP 2 392 615 B1**
(45) Date of publication and mention of the grant of the patent: **21.12.2016**
(21) Application number: 09839252.5
(22) Date of filing: 13.11.2009
(51) Int. Cl.: C08L 23/00, C08F 2/44, C08F 4/64, C08J 5/18, C08K 5/49

(54) **POLYOLEFIN RESIN COMPOSITION**
POLYOLEFINHARZZUSAMMENSETZUNG
COMPOSITION DE RÉSINE DE POLYOLÉFINE

(30) Priority: 28.01.2009 JP 2009017163; 19.02.2009 JP 2009036346; 05.11.2009 JP 2009254466
(43) Date of publication of application: 07.12.2011
(73) Proprietor: Adeka Corporation, Tokyo 1160012 (JP)
(72) Inventor: AYABE Takashi, Saitama-shi Saitama 336-0022 (JP); OKAMOTO Kohei, Saitama-shi Saitama 336-0022 (JP); SEGUCHI Tetsuya, Saitama-shi Saitama 336-0022 (JP); KAWAMOTO Naoshi, Saitama-shi Saitama 336-0022 (JP)
(74) Representative: Gill Jennings & Every LLP
(86) International application number: PCT/JP2009/069327
(87) International publication number: WO 2010/087063

(56) References cited:
- WO-A1-2009/147967
- JP-A- 2006 282 985
- JP-A- 2007 009 078
- US-A1- 2007 092 747
- US-A1- 2008 214 752

## Description

### TECHNICAL FIELD

The present invention relates to a method of molding a polyolefin-based resin composition stabilized by polymerizing an olefin-based monomer with an addition of a specific phenolic antioxidant, which is masked with an organic aluminum compound, and a phosphorus-based antioxidant to a catalyst system or polymerization system before or during the polymerization of the olefin-based monomer.

### BACKGROUND ART

Polyolefins such as polyethylene have a problem in that they are poorly stable against heat and light and, therefore, easily oxidized and degraded during molding when the temperature becomes high and during use where they are exposed to heat and light, so that the required service life as a plastic article cannot be attained. Thus, in order to prevent such oxidation and degradation, stabilizers such as a phenolic antioxidant, phosphorus-based antioxidant, sulfur-based antioxidant, hydroxylamine compound, hindered amine compound, UV absorber and acid scavenger are commonly added. In this manner, polyolefins are being practically used by selecting and blending a variety of such stabilizers depending on the use thereof. In addition, since a gel generated during resin molding may damage the appearance of the final product or cause a functional problem, for example, in its adhesiveness, inhibition of such gel generation is also demanded.

Examples of method of adding a stabilizer to a polyolefin include one in which a polyolefin-based resin obtained by polymerizing an olefin-based monomer is mixed with a stabilizer and the resultant is melt-kneaded by a molding machine such as an extruder so as to disperse the stabilizer in the polyolefin-based resin; and one in which a stabilizer is added before or during polymerization of an olefin-based monomer.

However, in such a method in which a polyolefin-based resin and a stabilizer are blended by melt-kneading, there is a problem that a more than necessary amount of stabilizer must be added in order to compensate poor dispersion of stabilizer per se in the polyolefin-based resin.

Meanwhile, as a method in which a stabilizer is added before or during polymerization of an olefin-based monomer, for example, Patent Document 1 discloses a method in which polymerization of α-olefin is carried out in the presence of a phosphorus-based antioxidant. Patent Document 1 also indicates that, as compared to a polymer which was produced by adding an antioxidant to a polymerization product obtained by α-olefin polymerization without using a phosphorus-based antioxidant, a polymer obtained by polymerizing α-olefin in the presence of a phosphorus-based antioxidant attains superior stabilizing effect.

In addition, Patent Document 2 discloses that, by using a specific phosphorus-based antioxidant at the time of polymerization, a polymer having excellent color retention upon contact with water can be obtained without inhibiting the olefin polymerization.

Further, Patent Document 3 discloses that, since a phenolic antioxidant having an ester bond such as tetrakis(3-(3,5-di-tert-butyl-4-hydroxyphenyl)propionyloxymethyl)methane, which is a stabilizer widely used for polyolefins, reduces the catalytic activity of a polymerization catalyst, it is not suitable to be added before polymerization.

Furthermore, Patent Documents 4 and 5 discloses a method of producing a stabilized polymer in which a phenolic antioxidant masked with an organic aluminum compound is added before or during polymerization of a monomer having an ethylenic unsaturated bond.

### RELATED ART DOCUMENTS

### PATENT DOCUMENTS

Patent Document 1: Japanese Unexamined Patent Application Publication No. S63-92613
Patent Document 2: Japanese Unexamined Patent Application Publication No. H8-208731
Patent Document 3: Japanese Unexamined Patent Application Publication No. H5-271355
Patent Document 4: Japanese Unexamined Patent Application Publication No. 2006-52241
Patent Document 5: Japanese Unexamined Patent Application Publication No. 2006-282985

### SUMMARY OF THE INVENTION

### PROBLEMS TO BE SOLVED BY THE INVENTION

In this manner, addition of a stabilizer before or during polymerization of an olefin-based monomer is advantageous in that the process of blending the stabilizer by melt-kneading after polymerization can be omitted; however, since it reduces the catalytic activity of a polymerization catalyst and causes coloration of the resulting polyolefin-based resin due to interaction between the stabilizer and catalyst metal, there are problems, for example, that the selection and management of polymerization conditions become complicated. In Patent Documents 4 and 5, the amounts of phenolic antioxidant and phosphorus-based antioxidant to be blended and the effect thereof are not specifically examined, and there is no description at all with regard to the inhibition of gel generation during molding of polyolefin-based resin.

Furthermore, under the pressure for cost reduction associated with the recent global economic slump, a polyolefin which not only exhibits stabilizing effect but also has superior cost performance is demanded. Therefore, an object of the present invention is to provide a polyolefin-based resin composition having superior stabilizing effect and cost performance. Further, another object of the present invention is to provide a stabilized polyolefin-based resin composition in which generation of gel is suppressed.

### MEANS FOR SOLVING THE PROBLEMS

In order to solve the above-described problems, the present inventors intensively studied to discover that the above-described objects can be attained by blending a specific phenolic antioxidant and phosphorus-based antioxidant in combination at the time of polymerization of an olefin-based monomer to reduce the required amount of stabilizer(s) and suppress gel generation during molding, thereby completing the present invention.

That is, the present invention relates to a method of molding a polyolefin-based resin composition as defined in claim 1.

In the present invention, it is preferred that the aforementioned olefin-based monomer be ethylene; that R in the aforementioned Formula (I) be a C₁₂-C₂₄ alkyl group which is optionally branched; that the aforementioned phosphorus-based antioxidant be tris(2,4-di-tert-butylphenyl)phosphite; and that the aforementioned organic aluminum compound be a trialkyl aluminum. In addition, in the present invention, it is preferred that the catalyst for the polymerization of the aforementioned olefin-based monomer be a transition-metal catalyst. Further, it is preferred that the catalyst for the polymerization of the aforementioned olefin-based monomer be a Ziegler-Natta type catalyst.

Further, in the polyolefin-based resin composition, it is preferred that the weight average molecular weight of the polyolefin-based resin after extrusion carried out at 280°C using a uniaxial extruder in accordance with JIS K 6921-2 be not less than 50% of that prior to the extrusion. Furthermore, the polyolefin-based resin composition is molded into a film by a 5-minute pressing using a press machine at 230°C and a load of 11 MPa, wherein the number of spots where gel is generated per 1 cm² of the film be not greater than 2.

### EFFECTS OF THE INVENTION

According to the present invention, a polyolefin-based resin composition having superior stabilizing effect and cost performance in which the required amount of stabilizer(s) is largely reduced can be provided. Further, a stabilized polyolefin-based resin composition in which generation of gel is suppressed can be provided.

### MODES FOR CARRYING OUT THE INVENTION

The polyolefin-based resin composition will now be described in detail.

The phenolic antioxidant used in the present invention is a compound represented by the following Formula (I) and is used in an amount of 0.001 to 0.5 parts by mass, preferably 0.005 to 0.3 parts by mass, with respect to 100 parts by mass of the olefin-based monomer: 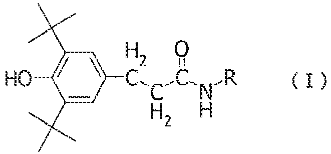 (wherein, R represents a C₁-C₃₀ alkyl group or C₂-C₃₀ alkylene group which is optionally branched and/or optionally has a cycloalkyl group, a C₃-C₁₂ cycloalkyl group which is optionally substituted or a C₆-C₁₈ aryl group which is optionally substituted).

Examples of the C₁-C₃₀ alkyl group which is optionally branched and represented by R in the aforementioned Formula (I) include methyl group, ethyl group, propyl group, isopropyl group, butyl group, sec-butyl group, tert-butyl group, isobutyl group, pentyl group, isopentyl group, tert-pentyl group, hexyl group, heptyl group, n-octyl group, isooctyl group, tert-octyl group, nonyl group, isononyl group, decyl group, undecyl group, dodecyl group, tridecyl group, tetradecyl group, pentadecyl group, hexadecyl group, heptadecyl group and octadecyl group; however, in the present invention, a C₁₂-C₂₄ alkyl group is particularly preferred. When the alkyl group has less than 12 carbon atoms, the phenolic antioxidant may become likely to be vaporized, while when the alkyl group has more than 24 carbon atoms, the ratio of phenol to the molecular weight of the phenolic antioxidant is decreased, so that the stabilizing effect may become reduced.

Further, these alkyl groups are also optionally interrupted by an oxygen atom, sulfur atom, carbonyl group or the later-mentioned aryl group, and the hydrogen atom(s) in these alkyl groups is/are also optionally substituted by, for example, a hydroxy group, cyano group, alkenyl group, chain aliphatic group such as alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or cyclic aliphatic group such as cycloalkyl group. In addition, such interruption(s) or substitution(s) may also exist in combination.

Examples of the C₂-C₃₀ alkenyl group represented by R in the aforementioned Formula (I) include those alkenyl groups corresponding to the aforementioned alkyl groups, such as vinyl group, propenyl group, butenyl group, hexenyl group and oleyl group. Here, the C₂-C₃₀ alkenyl group may be either linear or branched, and the position of double bond is not particularly restricted as well.

The aforementioned alkenyl groups are also optionally interrupted by an oxygen atom, sulfur atom or the later-mentioned aryl group, and the hydrogen atom(s) in these alkenyl groups is/are also optionally substituted by a hydroxy group, cyano group, alkenyl group, chain aliphatic group such as alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as cycloalkyl group.

Examples of the C₃-C₁₂ cycloalkyl group which is optionally substituted and represented by R in the aforementioned Formula (I) include cyclopropyl group, cyclopentyl group, cyclohexyl group, cycloheptyl group, cyclooctyl group, cyclononyl group and cyclodecyl group. The hydrogen atom(s) in these cycloalkyl groups is/are also optionally substituted by an alkyl group, alkenyl group, alkenyloxy group, hydroxy group or cyano group, and the alkyl group is also optionally interrupted by an oxygen atom or sulfur atom.

Examples of the C₆-C₁₈ aryl group which is optionally substituted and represented by R in the aforementioned Formula (I) include phenyl group, methylphenyl group, butylphenyl group, octylphenyl group, 4-hydroxyphenyl group, 3,4,5-trimethoxyphenyl group, 4-tert-butylphenyl group, biphenyl group, naphthyl group, methylnaphthyl group, anthracenyl group, phenanthryl group, benzyl-phenylethyl group and 1-phenyl-1-methylethyl group. Further, the hydrogen atom(s) in these aryl groups is/are also optionally substituted by an alkyl group, alkenyl group, alkenyloxy group, hydroxy group or cyano group, and the alkyl groups are also optionally interrupted by an oxygen atom or sulfur atom.

Examples of the specific structure of the phenolic antioxidant represented by the aforementioned Formula (I) include the following Compounds No. 1 to No. 16. However, the present invention is not restricted by the following compounds.

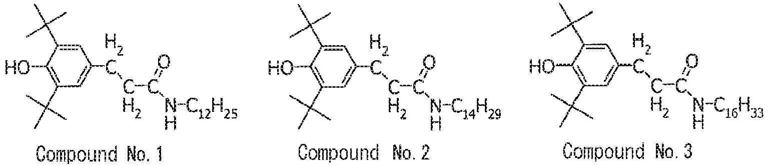

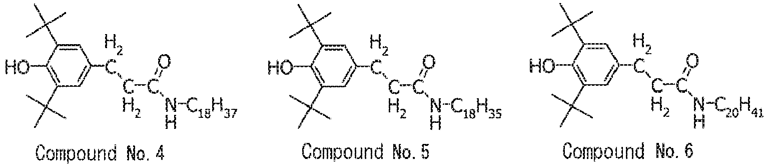

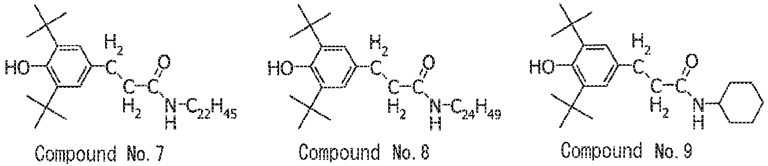

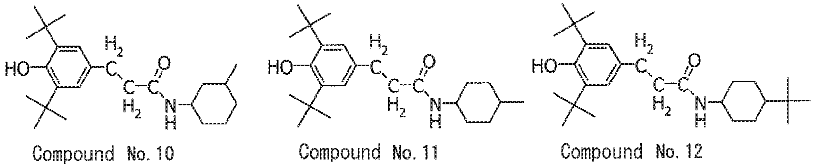

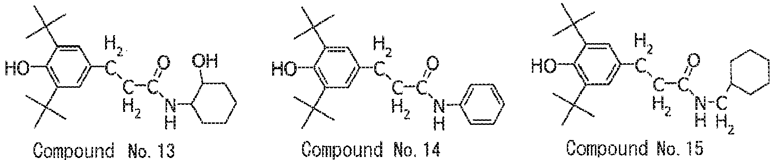

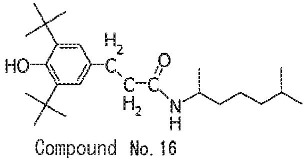

In the present invention, the term "phenolic antioxidant masked with an organic aluminum" means a phenolic antioxidant in which a hydrogen of the phenolic hydroxyl group is substituted by an organic aluminum compound, the phenolic antioxidant being masked by treating with a hydrogen-donating compound such as water, an alcohol or acid in such a manner that the phenolic antioxidant can be regenerated to phenol. Among such phenolic antioxidants, those which can react with a deactivator used for catalyst deactivation in polymerization reaction to be regenerated to phenol is preferred, and particularly preferred is a phenolate (salt) which normally exists in a polymerization system where a polymerization catalyst for olefin-based resin is used and is obtained by a reaction between an organic aluminum compound not inhibiting polymerization and a phenolic antioxidant.

As the aforementioned organic aluminum compound, for example, alkyl aluminum or alkyl aluminum hydride may be used, and alkyl aluminum is preferred. Particularly preferred is a trialkyl aluminum and specific examples thereof include trimethyl aluminum, triethyl aluminum, tri-n-propyl aluminum, triisobutyl aluminum, tri-n-hexyl aluminum and tri-n-octyl aluminum. All of the aforementioned organic aluminum compounds may be used as a mixture. Further, an aluminoxane obtained by a reaction between alkyl aluminum or alkyl aluminum hydride and water may also be used in the same manner.

The aforementioned phenolic antioxidant may be masked simply by mixing and stirring an organic aluminum compound such as trialkyl aluminum and the phenolic antioxidant in an inert solvent. In the reaction by this method, in cases where a by-produced compound does not affect the polymerization product, the phenolic antioxidant may be used as it is; however, in cases where a by-produced compound inhibits the polymerization, it is preferred that the compound be removed by distillation under reduced pressure or the like before use.

Examples of the aforementioned inert solvent include aliphatic and aromatic hydrocarbon compounds. Examples of the aliphatic hydrocarbon compound include saturated hydrocarbon compounds such as n-pentane, n-hexane, n-heptane, n-octane, isooctane and purified kerosene; and cyclic saturated hydrocarbon compound such as cyclopentane, cyclohexane and cycloheptane, and examples of the aromatic hydrocarbon compound include compounds such as benzene, toluene, ethylbenzene and xylene. Among these compounds, x-hexane or n-heptane is preferably used. The concentration of trialkyl aluminum salt in the inert solvent is preferably in the range of 0.001 to 0.5 mol/L, particularly preferably 0.01 to 0.1 mol/L.

Usually, the phosphorus-based antioxidant used in the present invention may be any of those which are commonly used as an antioxidant of olefin-based resin, and examples of thereof include triphenyl phosphite, tris(nonylphenyl)phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyl diphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tir-tert-butylphenyl)pentaerythritol diphosphite, bis(2,4-dicumylphenyl)pentaerythritol diphosphite, tetra(tridecyl)isopropylidene diphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakistert-butyldibenzo[d,f][1,3,2]dioxaphosphepin-6-yl)oxy]ethyl)amine and phosphites of 2-ethyl-2-butylpropylene glycol and 2,4,6-tri-tert-butylphenol. Particularly preferred is tris(2,4-di-tert-butylphenyl)phosphite. Such phosphorus-based antioxidant is used in the polyolefin-based resin composition obtained by polymerization of an olefin-based monomer in an amount of 0.001 to 3 parts by mass, preferably 0.001 to 0.5 parts by mass, more preferably 0.005 to 0.5 parts by mass, with respect to 100 parts by mass of the polyolefin-based resin.

The method of adding the phosphorus-based antioxidant in the present invention is not particularly restricted; however, when it is added separately in the form of powder or liquid, supplying thereof to a polymerization apparatus becomes difficult and the dispersion thereof in the resulting polyolefin-based resin is likely to become non-uniform; therefore, it is preferred that the phosphorus-based antioxidant be added in the form of slurry. As for slurring, a slurry can be easily obtained by adding the aforementioned phosphorus-based antioxidant to an inert solvent which does not affect polymerization and by stirring the resultant.

Examples of the olefin-based monomer used in the present invention include ethylene, propylene, 1-butene, 1-hexene, 3-methyl-1-butene, 3-methyl-1-pentene, 4-methyl-1-pentene, vinylcycloalkane, styrene and derivatives thereof.

Examples of the polymerization catalyst used in the present invention include compounds of a transition metal belonging to Group 3 to 11 of the Periodic Table (for example, titanium, zirconium, hafnium, vanadium, iron, nickel, lead, platinum, yttrium and samarium). Representative examples thereof include Ziegler-Natta type catalysts comprising a titanium-containing solid transition metal component and an organic metal component; and metallocene catalysts comprising a transition metal compound, which has at least one cyclopentadienyl skeleton and belongs to Group 4 to 6 of the Periodic Table, and a co-catalyst component.

It is required that the polymerization of olefin-based monomer be carried out in an inert gas atmosphere such as nitrogen; however, it may also be carried out in an inert solvent such as pentane, hexane, heptane, toluene or xylene. Further, an active hydrogen compound, particulate carrier, organic aluminum compound, ion-exchanging layered compound and/or inorganic silicate may also be added in a range which does not inhibit the polymerization.

Polymerization of the olefin-based monomer can be carried out by, for example, a method in which an olefin-based monomer is polymerized to produce a polyolefin homopolymer by slurry polymerization, gas-phase polymerization, bulk polymerization, solution polymerization, a combination of these polymerization methods, one-step polymerization or multi-step polymerization; a method in which a copolymer is produced by co-polymerizing propylene and at least one olefin (excluding propylene) unit selected from the group consisting of olefin units having 2 to 12 carbon atoms; or a method in which a copolymer is produced by co-polymerizing ethylene and at least one olefin (excluding ethylene) unit selected from the group consisting of olefin units having 2 to 12 carbon atoms. Further, the polymerization can be carried out regardless of whether it is batch-type or continuous-type. At the end of the polymerization, the catalyst therefor can be degraded, for example, by adding water (water vapor) or an alcohol.

In the stabilized polyolefin-based resin composition, other conventional additive(s) may be further blended as required. Examples of method of blending other additive(s) include a method in which the other additive(s) in an amount suitable for the purpose thereof is/are mixed with the polyolefin-based resin composition according to the present invention and the resultant is then granulated and molded by melt-kneading using a molding machine such as an extruder. Examples of the other additive(s) include UV absorbers, hindered amine compounds, heavy metal inactivators, nucleating agents, flame retardants, metallic soaps, hydrotalcites, fillers, lubricants, antistatic agents, pigments, dyes and plasticizers. The phenolic antioxidant and phosphorus-based antioxidant that are used in the present invention and other phenolic antioxidant(s) and phosphorus-based antioxidant(s) may also be further added to the polyolefin-based resin composition to be molded.

Examples of the aforementioned UV absorber include 2-hydroxybenzophenones such as 2,4-dihydroxybenzophenone, 2-hydroxy-4-methoxybenzophenone, 2-hydroxy-4-octoxy benzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazorylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C₁₂₋₁₃ mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilide such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and various metal salts and metal chelates, particularly salts and chelates of nickel and chromium. The aforementioned UV absorber is used in an amount of 0.001 to 5 parts by mass, more preferably 0.005 to 0.5 parts by mass, with respect to 100 parts by mass of the aforementioned polyolefin-based resin.

Examples of the aforementioned hindered amine-based light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, tetrakis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl}decanedioate, bis{4-(2,2,6,6-tetramethyl-l-octyloxy)piperidyl}decanedioate, bis{4-(2,2,6,6-tetramethyl-1-undecyloxy)piperidyl}carbonate and TINUVIN NOR 371 manufactured by Ciba Specialty Chemicals Corporation. The aforementioned hindered amine-based light stabilizer is used in an amount of 0.001 to 5 parts by mass, more preferably 0.005 to 0.5 parts by mass, with respect to 100 parts by mass of the aforementioned polyolefin-based resin.

Examples of the aforementioned nucleating agent include metal carboxylates such as sodium benzoate, 4-tert-butyl aluminum benzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyalcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxyamide, N,N',N"-tricyclohexyl-1,3,5-benzene tricarboxyamide, N,N'-dicyclohexyl-naphthalene dicarboxyamide and 1,3,5-tri(dimethylisopropoylamino)benzene. The aforementioned nucleating agent is used in an amount of 0.001 to 10 parts by mass, more preferably 0.005 to 5 parts by mass, with respect to 100 parts by mass of the aforementioned polyolefin-based resin.

Examples of the aforementioned flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphates such as divinyl phenyl phosphate, diallylphenyl phosphate and (1-butenyl)phenyl phosphate; phosphinates such as diphenyl phenyl phosphinate, diphenyl methyl phosphinate and 9,10-dihydro-9-oxa-10-phosphaphenanthlene-10-oxide derivative; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol Type A epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol Type A dimethacrylate, pentabromobenzyl acrylate and brominated styrene. The aforementioned flame retardant is used in an amount of 1 to 70 parts by mass, more preferably 10 to 30 parts by mass, with respect to 100 parts by mass of the aforementioned polyolefin-based resin.

Examples of the aforementioned other phenolic antioxidant(s) include 2,6-di-tert-butyl-p-cresol, 2,6-diphenyl-4-octadesiloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzyl thioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butylic acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acroyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane and triethylene glycolbis[β-(3-tert-butyl-4-hydroxy-5-methylphenyl)propionate]. The aforementioned other phenolic antioxidant(s) is/are used in an amount of 0.001 to 10 parts by mass, more preferably 0.01 to 5 parts by mass, with respect to 100 parts by mass of the aforementioned polyolefin-based resin.

The use of the polyolefin-based resin composition obtained by the method of the present invention is not particularly restricted. The polyolefin-based resin composition obtained by the method of the present invention can be molded by known extrusion molding, injection molding, hollow molding, blow molding or the like into films, sheets and the like, and these can be used in automobile parts, construction materials, agricultural materials, packaging materials, daily miscellaneous goods, toys and the like. In such cases, a polyolefin-based resin composition in which the weight average molecular weight of the polyolefin-based resin after extrusion carried out at 280°C using a uniaxial extruder in accordance with JIS K 6921-2 is not less than 50% of that prior to the extrusion can be suitably used. In addition, a polyolefin-based resin composition in which the number of spots where gel is generated per 1 cm² of film is not greater than 2 when the polyolefin-based resin composition is molded into a film by a 5-minute pressing using a press machine at 230°C and a load of 11 MPa can also be suitably used.

### EXAMPLES

The present invention will now be described in more detail by way of Examples, Comparative Examples and Reference Examples. However, the present invention is not restricted by these Examples or the like.

### (Example 1)

In accordance with the following procedures ([1] Preparation of catalyst slurry, [2] Preparation of phenoxide solution, [3] Preparation of phosphite solution, [4] Polymerization of olefin-based monomer), a polyolefin-based resin composition was obtained.

### [1] Preparation of catalyst slurry

Anhydrous magnesium chloride (4.76 g, 50 mmol), 25 mL of decane and 23.4 mL (150 mmol) of 2-ethylhexyl alcohol were added and the resultant was heated and allowed to react at 130°C for 2 hours to obtain a uniform solution. Then, to the thus obtained uniform solution, 1.11 g (7.5 mmol) of phthalic anhydride was further added, and the resultant was stirred for 1 hour while maintaining the temperature thereof at 130°C to dissolve the phthalic anhydride in the uniform solution. Next, the thus obtained uniform solution was cooled to room temperature, and the entire amount thereof was added dropwise over a period of 1 hour into 200 mL (1.8 mol) of titanium tetrachloride maintained at -20°C. After the addition, the resultant was heated to 110°C over a period of 4 hours. After the temperature reached 110°C, 2.68 mL (12.5 mmol) of diisobutyl phthalate was added, and the resultant was allowed to react by stirring for 2 hours while maintaining the temperature thereof at 110°C. After the reaction, residue was collected by hot filtration. After resuspending the residue in 200 mL of titanium tetrachloride, the thus obtained suspension was allowed to react for 2 hours by heating it again to 110°C. After the reaction, the suspension was once again hot-filtered to collect residue, and the thus collected residue was sufficiently washed with 110°C decane and hexane until no free titanium compound was detected in the washing solution to obtain a solid titanium catalyst component. When a portion of this solid titanium catalyst component was dried and the catalyst composition and the catalyst composition was analyzed, the component contained 3.1% by mass of titanium, 56.0% by mass of chlorine, 17.0% by mass of magnesium and 20.9% by mass of isobutyl phthalate. To the solid titanium catalyst component synthesized by the above-described production method, heptane was added so as to attain a 5 mg/mL heptane slurry to prepare a catalyst slurry.

### [2] Preparation of phenoxide solution

To a flask substituted with nitrogen, 3-(3,5-di-tert-butyl-4-hydroxyphenyl)-N-octadecylpropionamide (1.03 g, 1.94 mmol) and 65.5 mL of dry heptane were added. To the resultant, 3.0 mL (1 mol/L) of triethyl aluminum/heptane solution was dropped with stirring to prepare a phenoxide solution.

### [3] Preparation of phosphite solution

To a flask substituted with nitrogen, 0.9 g (1.4 mmol) of tris(2,4-di-tert-butylphenyl)phosphite and 30 mL of dry heptane were added to prepare a phosphite solution.

### [4] Polymerization of olefin-based monomer

To an autoclave substituted with nitrogen, 600 mL of dry heptane and 2.2 mL (1 mol/L) of triethyl aluminum/heptane solution were added. Further, 1.4 mL of the phenoxide solution prepared in the above-described [2], 0.7 mL of the phosphite solution prepared in the above-described [3], 4.1 mL of heptane solution in which 1.2 g (5.3 mmol) of dicyclopentyldimethoxy silane was dissolved in 100 mL of dry heptane by stirring and 4.0 mL of the catalyst slurry prepared in the above-described [1] were successively added. The autoclave was substituted with propylene atmosphere, and hydrogen (0.34 L; based on standard condition) was added thereto to carry out 5-minute pre-polymerization (600 rpm) at a propylene pressure of 0.098 MPa (G) and a temperature of 50°C. Then, polymerization reaction was performed for 1 hour at a propylene pressure of 0.59 MPa (G) and a temperature of 70°C. After purging the gas, 5 mL of ethanol was added to the reaction solution, which was then stirred for 5 minutes to stop the polymerization reaction. Thereafter, the solvent was removed under reduced pressure and the resultant was dried at 40°C for 10 hours in vacuum to obtain a polyolefin-based resin composition.

### (Comparative Example 1)

A polyolefin-based resin was obtained by performing polymerization in the same manner as in the above-described [4] Polymerization of olefin-based monomer of Example 1, except that the 0.7 mL of the phosphite solution was not used. Then, tris(2,4-di-tert-butylphenyl)phosphite was mixed with the thus obtained polyolefin-based resin in an amount 100 ppm, and the resultant was granulated using an uniaxial extruder (machine: Plastomill µ manufactured by Toyo Seiki Seisaku-sho, Ltd.; extrusion temperature: 230°C; screw rotational speed: 50 rpm) to obtain a pellet.

### (Reference Example 1)

A polyolefin-based resin was obtained by performing polymerization in the same manner as in the above-described [4] of Example 1, except that the 1.4 mL of the phenoxide solution and the 0.7 mL of the phosphite solution were not used. Then, tris(2,4-di-tert-butylphenyl)phosphite and tetrakis[methylene-3-(3,5-di-tert-butyl-4'-hydroxyphenyl)propionate]methane were mixed with the thus obtained polyolefin-based resin in an amount of 500 ppm each, and the resultant was granulated using an uniaxial extruder (machine: Plastomill µ manufactured by Toyo Seiki Seisaku-sho, Ltd.; extrusion temperature: 230°C; screw rotational speed: 50 rpm) to obtain a pellet.

### (Evaluation of the stabilizing effect)

For the polyolefin-based resin compositions or pellets obtained by the above-described methods, granulation by the uniaxial extruder (machine: Plastomill µ manufactured by Toyo Seiki Seisaku-sho, Ltd.; extrusion temperature: 280°C; screw rotational speed: 50 rpm) was repeated for 5 times. The weight average molecular weight of the polyolefin-based resins was measured for every round of the granulation to evaluate the stabilizing effect of the polyolefin-based resin. The weight average molecular weight was measured by gel permeation chromatography (apparatus: GPC2000 manufactured by Waters Corp.; columns: two Styragel HT6E and one Styragel HT2, both manufactured by Waters Corp.; measurement temperature: 135°C; solvent: ortho-dichlorobenzene; concentration: 6 mg/10g). It is noted here that, since the polyolefin-based resin compositions of Comparative Example 1 and Reference Example 1 had already been subjected to extrusion once, the number of extrusions by the uniaxial extruder was adjusted to be equal for the evaluation.

**[Table 1]**

| | | Example 1 | Comparative Example 1 | Reference Example 1 |
|---|---|---|---|---|
| Phenolic antioxidant (concentration [ppm]) | | Compound 1¹⁾ 100 | Compound 1¹⁾ 100 | Comparative Compound³⁾ 500 |
| Method of adding phenolic antioxidant | | At the time of polymerization | At the time of polymerization | At the time of granulation |
| Phosphorus-based antioxidant (concentration [ppm]) | | Compound 2²⁾ 100 | Compound 2²⁾ 100 | Compound 2²⁾ 500 |
| Method of adding phosphorus-based antioxidant | | At the time of polymerization | At the time of granulation | At the time of granulation |
| Yield of polyolefin-based resin (g) | | 156 | 158 | 151 |
| Evaluation of stabilizing effect: The number of granulations and the weight average molecular weight of polyolefin-based resin (Mw × 10³) | No granulation | 510 | - | - |
| | 1st granulation | 450 | 430 | 470 |
| | 2nd granulation | 390 | 340 | 400 |
| | 3rd granulation | 340 | 310 | 340 |
| | 4th granulation | 300 | 280 | 310 |
| | 5th granulation | 280 | 250 | 280 |

| | | | | |
|---|---|---|---|---|
| 1) Compound 1: 3-(3,5-di-tert-butyl-4-hydroxyphenyl)-N-octadecylpropionamide 2) Compound 2: tris(2,4-di-tert-butylphenyl)phosphite 3) Comparative compound: tetrakis[methylene-3-(3,5-di-tert-butyl-4'-hydroxyphenyl)propionate]methane | | | | |

According to Comparative Example 1, in the case where the phenolic antioxidant, 3-(3,5-di-tert-butyl-4-hydroxyphenyl)-N-octadecylpropionamide, which was masked with an organic aluminum compound, was added at the time of the olefin-based monomer polymerization and the phosphorus-based antioxidant, tris(2,4-di-tert-butylphenyl)phosphite, was added after the olefin-based monomer polymerization, a satisfactory stabilizing effect of polyolefin-based resin composition was not attained. In contrast to this, in the case where both of the phenolic antioxidant masked with an organic aluminum compound and the phosphorus-based antioxidant were added at the time of the olefin-based monomer polymerization, a superior stabilizing effect was attained.

From these results, it was confirmed that, by adding a specific phenolic antioxidant masked with an organic aluminum compound and a phosphorus-based antioxidant in combination before or during polymerization of olefin-based monomer, a polyolefin-based resin composition having superior stabilizing effect and cost performance in which the required amount of stabilizer(s) is largely reduced can be obtained.

### (Example 2)

In accordance with the following procedures ([1] Preparation of catalyst slurry, [2] Preparation of phenoxide solution, [3] Preparation of phosphite solution and [4] Ethylene polymerization), a polyethylene resin composition was obtained.

### [1] Preparation of catalyst slurry

To a flask substituted with nitrogen, 31.2 g (273 mmol) of diethoxy magnesium, 41.2 g (136 mmol) of tributoxy titanium chloride and 10.1 g of n-butanol were added and the resultant was allowed to react under heating at 150°C for 6 hours to obtain a uniform solution, which was then allowed to cool to room temperature and added with 200 mL of n-heptane. Thereafter, the resultant was heated to 40°C and 20.6 g (82.6 mmol) of ethylaluminum sesquichloride was added dropwise thereto. The resulting mixture was allowed to react with stirring for 1 hour.

After the reaction, the resultant was sufficiently washed with n-heptane until no free titanium compound was detected in the washing solution to obtain a solid titanium catalyst component (Ziegler catalyst). To the solid titanium catalyst component synthesized by the above-described production method, n-heptane was added so as to obtain a heptane slurry containing titanium in an amount of 0.16 mg/mL, thereby a catalyst slurry was prepared.

### [2] Preparation of phenoxide solution

To a flask substituted with nitrogen, 1.03 g (1.94 mmol) of 3-(3,5-di-tert-butyl-4-hydroxyphenyl)-N-octadecylpropionamide and 65.5 mL of dry heptane were added, and 3.0 mL (1 mol/L) of triethyl aluminum/n-heptane solution was further added dropwise with stirring to prepare a phenoxide solution.

### [3] Preparation of phosphite solution

To a flask substituted with nitrogen, 0.50 g (0.77 mmol) of tris(2,4-di-tert-butylphenyl)phosphite and 20 mL of dry heptane were added and stirred to prepare a phosphite solution.

### [4] Ethylene polymerization

To an autoclave substituted with nitrogen, 600 mL of dry heptane and 2.94 mL (1 mol/L) of triethyl aluminum/n-heptane solution were added. Further, 0.50 mL of the phenoxide solution prepared in the above-described [2], 0.22 mL of the phosphite solution prepared in the above-described [3] and 4.0 mL of the catalyst slurry prepared in the above-described [1] were successively added. After purging the nitrogen in the autoclave with ethylene, 5-minute pre-polymerization (600 rpm) was carried out at an ethylene pressure of 0.098 MPa (G) and a temperature of 50°C. Thereafter, at a hydrogen pressure of 0.23 MPa (G) and an ethylene pressure of 0.36 MPa (G), the temperature was raised to 80°C over a period of 30 minutes and polymerization reaction (600 rpm) was performed for 75 minutes while maintaining the pressures. After purging the gas, 5 mL of ethanol was added to the reaction solution, which was then stirred for 5 minutes to stop the polymerization reaction. Thereafter, the solvent was removed under reduced pressure and the resultant was dried at 40°C for 10 hours in vacuum to obtain a polyethylene resin composition in powder form.

### (Comparative Example 2-1)

Polyethylene powder was obtained by performing polymerization in the same manner as in the above-described [4] Ethylene polymerization of Example 2, except that the 0.50 mL of the phenoxide solution and the 0.22 mL of the phosphite solution were not used.

### (Comparative Example 2-2)

With respect to 100 parts by mass of the polyethylene powder obtained in the above-described Comparative Example 2-1, 3-(3,5-di-tert-butyl-4-hydroxyphenyl)-N-octadecylpropionamide and tris(2,4-di-tert-butylphenyl)phosphite were added in an amount of 0.01 parts by mass each, and the resultant was mixed.

### (Comparative Example 2-3)

With respect to 100 parts by mass of the polyethylene powder obtained in the above-described Comparative Example 2-1, octadecyl-3-(3',5'-di-t-butyl-4'-hydroxyphenyl)propionate and tris(2,4-di-tert-butylphenyl)phosphite were added in an amount of 0.03 parts by mass each, and the resultant was mixed.

### (Measurement of gel)

A film was prepared from the polyethylene resin compositions obtained in the above-described method by using a 50-ton heating/cooling press (TBD-50-2; manufactured by Toho Machinery Co., Ltd.). With regard to the press conditions, the polyethylene resin composition was placed on a pressing plate and heated, as remaining heat, at a temperature 10°C higher than the temperature at which the polyethylene resin composition was to be pressed, and after degassing twice, the temperature was decreased to 190°C or 230°C to perform a 5-minute pressing at a load of 11 MPa, thereby preparing a film having a thickness of 150 µm. For the thus obtained film, the number of gels per 1 cm² was measured using a fringe magnifier (R412 manufactured by Carton Optical Industries, Ltd.; magnification of × 7, 19 mmΦ). The measurement was carried out at 9 arbitrary spots to calculate an average. The results thereof are shown in Table 2 below.

**[Table 2]**

| | | Example 2 | Comparative Example 2-1 | Comparative Example 2-2 | Comparative Example 2-3 |
|---|---|---|---|---|---|
| Phenolic antioxidant (concentration [ppm]) | | Compound 1¹⁾ 100 | - | Compound 1¹⁾ 100 | Comparative Compound⁴⁾ 300 |
| Method of adding phenolic antioxidant | | At the time of polymerization | Not added | After polymerization | After polymerization |
| Phosphorus-based antioxidant (concentration [ppm]) | | Compound A²⁾ 100 | - | Compound A²⁾ 100 | Compound A²⁾ 300 |
| Method of adding phosphorus-based antioxidant | | At the time of polymerization | Not added | After polymerization | After polymerization |
| Average number of gels (gels/cm²) | Film obtained by pressing at 190°C | 1.2 | 2.2 | 1.4 | 1.3 |
| | Film obtained by pressing at 230°C | 1.4 | 7.1 | 2.6 | 3.1 |

| | | | | | |
|---|---|---|---|---|---|
| 1) Compound 1: 3-(3,5-di-tert-butyl-4-hydroxyphenyl)-N-octadecylpropionamide 2) Compound A: tris(2,4-di-tert-butylphenyl)phosphite 4) Comparative compound: octadecyl-3-(3',5'-di-t-butyl-4'-hydroxyphenyl)propionate | | | | | |

According to Comparative Example 2-1, in the film which was prepared using the press machine from the polyethylene powder not stabilized by an antioxidant, a large amount of gel was generated. In addition, according to Comparative Example 2-2, in the film which was prepared using the press machine by mixing, with respect to 100 parts by mass of the polyethylene powder not stabilized by an antioxidant, 0.01 parts by mass each of the phenolic antioxidant masked with an organic aluminum compound and the phosphorus-based antioxidant, a large amount of gel was generated; therefore, the film was not satisfactory. Furthermore, according to Comparative Example 2-3, in the film which was prepared using the press machine by adding a commercially available phenolic antioxidant, octadecyl-3-(3',5'-di-t-butyl-4'-hydroxyphenyl)propionate) to the polyethylene powder not stabilized by an antioxidant, in which film the added amounts of the phenolic antioxidant and phosphorus-based antioxidant were increased to three times of those in Example 2, a large amount of was generated; therefore, the film was not satisfactory. In contrast, in the polyethylene resin composition according to the present invention obtained by adding the phenolic antioxidant masked with an organic aluminum compound and the phosphorus-based antioxidant at the time of the ethylene polymerization, generation of gel was considerably suppressed.

From the above, it was confirmed that, by adding a specific phenolic antioxidant masked with an organic aluminum compound and a phosphorus-based antioxidant in combination before or during polyolefin polymerization, a stabilized polyolefin-based resin composition in which generation of gel is suppressed.

## Claims

1. A method of molding a polyolefin-based resin composition, wherein said polyolefin-based resin composition comprises a polyolefin-based resin obtainable by polymerization of an olefin-based monomer with an addition of a phenolic antioxidant represented by the following Formula (I): 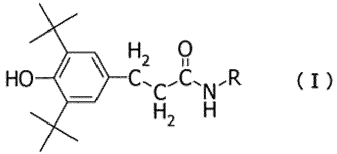
(wherein, R represents a C₁-C₃₀ alkyl group or C₂-C₃₀ alkenyl group which is optionally branched and/or optionally has a cycloalkyl group, a C₃-C₁₂ cycloalkyl group which is optionally substituted or a C₆-C₁₈ aryl group which is optionally substituted),
wherein a hydrogen of a phenolic hydroxyl group of said phenolic antioxidant is substituted by an organic aluminum compound, and a phosphorus-based antioxidant, to a catalyst system or polymerization system before or during said polymerization of said olefin-based monomer, and
wherein said phenolic antioxidant represented by said Formula (I) and said phosphorus-based antioxidant are added in an amount of 0.001 to 0.5 parts by mass and 0.001 to 3 parts by mass, respectively, with respect to 100 parts by mass of said olefin-based monomer;
said method comprising the step of molding said polyolefin-based resin composition;
wherein said polyolefin-based resin composition is molded into a film by a 5 minute pressing using a press machine at 230°C and a load of 11 MPa, and wherein the number of spots where gel is generated per 1 cm² of said film is not greater than 2, when measured by using a fringe magnifier having a magnification of x7 and a lens diameter of 19 mm.

2. The method according to claim 1, wherein said olefin-based monomer is ethylene.

3. The method according to claim 1 or 2, wherein said R in said Formula (I) is a C₁₂-C₂₄ alkyl group which is optionally branched.

4. The method according to any previous claim, wherein said phosphorus-based antioxidant is tris(2,4-di-tert-butylphenyl)phosphite.

5. The method according to any previous claim, wherein said organic aluminum compound is a trialkyl aluminum.

6. The method according to any preceding claim, wherein UV absorbers, hindered amine compounds, heavy metal indicators, nucleating agents, flame retardants, metallic soaps, hydrotalcites, fillers, lubricants, antistatic agents, pigments, dyes and/or plasticizers are blended with the composition.

7. The method according to any preceding claim, wherein said catalyst system for said polymerization of said olefin-based monomer is a transition metal catalyst.

8. The method according to claim 7, wherein said catalyst for said polymerization of said olefin-based monomer is a Ziegler-Natta catalyst.

9. The method according to any preceding claim, wherein the weight average molecular weight of said polyolefin based resin after extrusion carried out at 280°C using a uniaxial extruder in accordance with JIS K 6921 1 is not less than 50% of that prior to the extrusion.

10. The method according to any preceding claim, wherein the phosphorus-based antioxidant is added in the form of a slurry

11. The method according to claims 1 to 10, wherein the molding is carried out by extrusion molding, injection molding, hollow molding or blow molding into films or sheets.

## Patentansprüche

1. Verfahren zum Formen einer Harzzusammensetzung auf Polyolefinbasis, wobei die Harzzusammensetzung auf Polyolefinbasis ein Harz auf Polyolefinbasis umfasst, das erhältlich ist durch Polymerisierung eines Monomers auf Olefinbasis mit einer Addition eines phenolischen Antioxidans, dargestellt durch die folgende Formel (I): 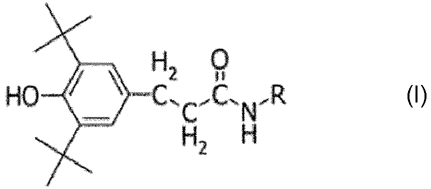
(wobei R Folgendes darstellt: eine C₁-C₃₀-Alkylgruppe oder eine C₂-C₃₀-Alkenylgruppe, optional verzweigt und/oder optional eine Cycloalkylgruppe, eine optional substituierte C₃-C₁₂-Cycloalkylgruppe oder eine optional substituierte C₆-C₁₈-Arylgruppe aufweisend),
wobei ein Wasserstoffatom einer phenolischen Hydroxylgruppe des phenolischen Antioxidans substituiert ist durch eine organische Aluminiumverbindung, sowie eines Antioxidans auf Phosphorbasis, an ein Katalysatorsystem oder ein Polymerisierungssystem vor oder während der Polymerisierung des Monomers auf Olefinbasis; und
wobei das phenolische Antioxidans, dargestellt durch die Formel (I), und das Antioxidans auf Phosphorbasis in einer Menge von 0,001 bis 0,5 Masseanteilen beziehungsweise 0,001 bis 0,3 Masseanteilen, bezogen auf 100 Masseanteile des Monomers auf Olefinbasis, hinzugefügt werden;
wobei das Verfahren den Schritt des Formens der Harzzusammensetzung auf Polyolefinbasis umfasst;
wobei die Harzzusammensetzung auf Polyolefinbasis durch ein 5 Minuten langes Pressen unter Einsatz einer Presse bei 230 °C und einem Druck von 11 MPa in eine Folie gepresst wird und wobei die Anzahl der Punkte pro 1 cm², an denen Gel erzeugt wird, nicht größer 2 ist, gemessen mit einem Fringe-Mikroskop mit einer 7-fachen Vergrößerung und einem Objektivdurchmesser von 19 mm.

2. Verfahren nach Anspruch 1, wobei das Monomer auf Olefinbasis Ethylen ist.

3. Verfahren nach Anspruch 1 oder 2, wobei das R in der Formel (I) eine optional verzweigte C₁₂-C₂₄-Alkylgruppe ist.

4. Verfahren nach einem der vorhergehenden Ansprüche, wobei das Antioxidans auf Phosphorbasis Tris(2,4-di-tert-butylphenyl)phosphit ist.

5. Verfahren nach einem der vorhergehenden Ansprüche, wobei die organische Aluminiumverbindung ein Trialkylaluminium ist.

6. Verfahren nach einem der vorhergehenden Ansprüche, wobei UV-Absorber, gehinderte Aminverbindungen, Schwermetallindikatoren, Keimbildner, Flammhemmer, Metallseifen, Hydrotalkite, Füllstoffe, Schmiermittel, Antistatikmittel, Pigmente, Farbstoffe und/oder Weichmacher der Zusammensetzung beigemischt sind.

7. Verfahren nach einem der vorhergehenden Ansprüche, wobei das Katalysatorsystem für die Polymerisierung des Monomers auf Olefinbasis ein Übergangsmetallkatalysator ist.

8. Verfahren nach Anspruch 7, wobei der Katalysator für die Polymerisierung des Monomers auf Olefinbasis ein Ziegler-Natta-Katalysator ist.

9. Verfahren nach einem der vorhergehenden Ansprüche, wobei die gewichtsgemittelte Molekülmasse des Harzes auf Polyolefinbasis nach einer Extrusion bei 280 °C unter Einsatz eines einachsigen Extruders nach JIS K 6921 1 wenigstens 50 % der vor dem Extrudieren entspricht.

10. Verfahren nach einem der vorhergehenden Ansprüche, wobei das Antioxidans auf Phosphorbasis in der Form einer Aufschlämmung hinzugefügt wird.

11. Verfahren nach Anspruch 1 bis 10, wobei das Formen durch Extrusionsformen, Spritzformen, Hohlkörperformen oder Blasformen in Folien oder Platten ausgeführt wird.

## Revendications

1. Procédé de moulage d'une composition de résine à base de polyoléfines, dans lequel ladite composition de résine à base de polyoléfines comprend une résine à base de polyoléfines qui peut être obtenue par polymérisation d'un monomère à base d'oléfines avec une addition d'un antioxydant phénolique représenté par la formule (I) suivante : 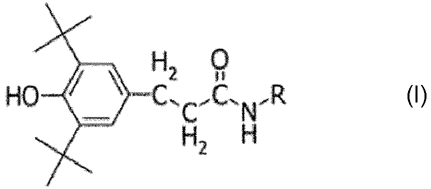
(dans lequel R représente un groupe alkyle en C₁-C₃₀ ou un groupe alcényle C₂-C₃₀ qui est facultativement ramifié et/ou facultativement a un groupe cycloalkyle, un groupe cycloalkyle en C₃-C₁₂ qui est facultativement substitué ou un groupe aryle en C₆-C₁₈ qui est facultativement substitué),
dans lequel un hydrogène d'un groupe hydroxyle phénolique dudit antioxydant phénolique est substitué par un composé d'aluminium organique, et un antioxydant à base de phosphore, à un système de catalyseur ou un système de polymérisation avant ou pendant ladite polymérisation dudit monomère à base d'oléfines, et
dans lequel ledit antioxydant phénolique représenté par ladite formule (I) et ledit antioxydant à base de phosphore sont ajoutés en une quantité de 0,001 à 0,5 partie en poids en masse et de 0,001 à 3 parties en masse, respectivement, par rapport à 100 parties en poids dudit monomère à base d'oléfines ;
ledit procédé comprenant l'étape de moulage de ladite composition de résine à base de polyoléfines ;
dans lequel ladite composition de résine à base de polyoléfines est moulée pour former un film par une compression de 5 minutes en utilisant une presse à 230 °C et une charge de 11 MPa, et
dans lequel le nombre de points où du gel est généré pour 1 cm² dudit film n'excède pas 2, quand il est mesuré en utilisant une loupe à frange ayant un grossissement de 7 et un diamètre de lentille de 19 mm.

2. Procédé selon la revendication 1, dans lequel ledit monomère à base d'oléfines est l'éthylène.

3. Procédé selon la revendication 1 ou 2, dans lequel ledit R dans ladite formule (I) est un groupe alkyle en C₁₂-C₂₄ qui est facultativement ramifié.

4. Procédé selon l'une quelconque des revendications précédentes, dans lequel ledit antioxydant à base de phosphore est le tris(2,4-di-tert-butylphényl)phosphite.

5. Procédé selon l'une quelconque des revendications précédentes, dans lequel ledit composé d'aluminium organique est un trialkylaluminium.

6. Procédé selon l'une quelconque des revendications précédentes, dans lequel des absorbeurs d'UV, des composés d'amine encombrée, des indicateurs de métaux lourds, des agents de nucléation, des retardateurs de flammes, des savons métalliques, des hydrotalcites, des charges, des lubrifiants, des agents antistatiques, des pigments, des colorants et/ou des plastifiants sont mélangés avec la composition.

7. Procédé selon l'une quelconque des revendications précédentes, dans lequel ledit système de catalyseur pour ladite polymérisation dudit monomère à base d'oléfines est un catalyseur de métal de transition.

8. Procédé selon la revendication 7, dans lequel ledit catalyseur pour ladite polymérisation dudit monomère à base d'oléfines est un catalyseur de Ziegler-Natta.

9. Procédé selon l'une quelconque des revendications précédentes, dans lequel le poids moléculaire moyen en poids de ladite résine à base de polyoléfines après une extrusion réalisée à 280 °C en utilisant une extrudeuse uniaxiale conformément à JIS K 6921 1 n'est pas inférieur à 50 % de celui qui précède l'extrusion.

10. Procédé selon l'une quelconque des revendications précédentes, dans lequel l'antioxydant à base de phosphore est ajouté sous la forme d'une suspension.

11. Procédé selon les revendications 1 à 10, dans lequel le moulage est réalisé par moulage par extrusion, moulage par injection, moulage de corps creux ou moulage par soufflage pour obtenir des films ou des feuilles.
